# EUROPÄISCHE PATENTANMELDUNG

(11) **EP 4 309 478 A1**
(43) Veröffentlichungstag der Anmeldung: **24.01.2024**
(21) Anmeldenummer: 23186270.7
(22) Anmeldetag: 19.07.2023
(51) Int. Cl.: A01B 29/04, A01B 29/00

(54) **TRAGVORRICHTUNG FÜR BODENBEARBEITUNGSWERKZEUGE EINER BODENBEARBEITUNGSVORRICHTUNG SOWIE BODENBEARBEITUNGSVORRICHTUNG**

(30) Priorität: 20.07.2022 DE 202022104096 U
(71) Anmelder: Hendlmeier, Konrad, 93107 Untersanding (DE)
(72) Erfinder: Hendlmeier, Konrad, 93107 Untersanding (DE)
(74) Vertreter: Glück Kritzenberger Patentanwälte PartGmbB

(57) **Zusammenfassung**

Die Erfindung betrifft eine Tragvorrichtung zum tragenden Halten von Bodenbearbeitungswerkzeugen einer walzenartig ausgebildeten, rotierenden Bodenbearbeitungsvorrichtung, wobei die Tragvorrichtung eine Mittellängsachse aufweist und um die Mittellängsachse rotierbar ist, dadurch gekennzeichnet, dass die Tragvorrichtung einen die Mittellängsachse aufnehmenden Zentrumsbereich sowie mindestens eine speichenartig ausgebildete und radial vom Zentrumsbereich wegstehende Werkzeugaufnahme für die Befestigung wenigstens eines Bodenbearbeitungswerkzeugs aufweist. Die Tragvorrichtung umfasst wenigstens ein erstes flächiges Tragelement, wobei der Zentrumsbereich der Tragvorrichtung zumindest zum Teil durch einen Mittenabschnitt des ersten flächigen Tragelements gebildet ist und wobei die zumindest eine speichenartig ausgebildete und radial vom Zentrumsbereich wegstehende Werkzeugaufnahme durch zumindest einen dem Mittenabschnitt abgewandten Tragabschnitt des wenigstens einen ersten flächigen Tragelements gebildet ist.

## Beschreibung

### Technisches Gebiet

Die Erfindung bezieht sich auf eine Tragvorrichtung zum tragenden Halten von Bodenbearbeitungswerkzeugen einer Bodenbearbeitungsvorrichtung insbesondere für Bodenbearbeitungswerkzeuge einer rotierenden Bodenbearbeitungsvorrichtung sowie auf eine Bodenbearbeitungsvorrichtung mit einer derartigen Tragvorrichtung.

### Stand der Technik

Walzenförmige Vorrichtungen für Bodenbearbeitungsvorgänge, beispielsweise zur Vorbereitung des Saatbetts für Sävorgänge und/oder zum Grob- bzw. Feinzerkrümeln und/oder Verfestigen des Bodens bzw. bestimmter Bodenschichten vor oder nach einem Sävorgang sind aus dem Stand der Technik hinreichend bekannt. Auch ist bekannt, mittels derartiger Vorrichtungen ein Abtasten der Bodenoberfläche durchzuführen, um die Bearbeitungstiefe der Bodenbearbeitungswerkzeuge einzustellen.

Derartige, auch als rotierende Bodenbearbeitungsvorrichtungen oder Bodenbearbeitungswalzen bezeichnete Vorrichtungen weisen in der Regel eine Längs- bzw. Walzenachse auf, die zugleich die Dreh- oder Rotationsachse bildet um die die Bodenbearbeitungsvorrichtung im Betrieb rotiert und die für gewöhnlich quer, insbesondere im Wesentlichen senkrecht zu einer Arbeitsrichtung, nämlich einer Zug- oder Schubrichtung der Bodenbearbeitungsvorrichtung, verläuft.

Bei den Bodenbearbeitungsvorrichtungen der genannten Art wird der Boden entsprechend bestimmter bzw. gewünschter Anforderungen mit Hilfe geeigneter Bodenbearbeitungswerkzeuge bearbeitet. Hierbei kommen verschiedene Bodenbearbeitungswerkzeuge zum Einsatz, die sich beispielsweise hinsichtlich ihrer Funktion für die verschiedenen Bodenbearbeitungsvorgänge unterscheiden und hierzu zum Beispiel als Stempel-, Zinken- oder Schneidwerkzeuge ausgebildet sein können. Bodenbearbeitungswerkzeuge können sich darüber hinaus auch hinsichtlich ihrer Form und Geometrie unterscheiden und können in verschiedenen Anordnungen am Walzenkörper einer Bodenbearbeitungswalze befestigt sein.

So können etwa stab- oder rohrstabförmige Bodenbearbeitungswerkzeuge vorgesehen sein, die an den rotierenden Bodenbearbeitungsvorrichtungen derart angebracht und montiert sind, dass sie im Wesentlichen achsparallel oder windschief um die Längs- bzw. Walzenachse herum angeordnet und an einem Walzenkörper befestigt sind. Ferner sind beispielsweise ringförmige Bodenbearbeitungswerkzeuge bekannt, die in jeweiligen Abständen zueinander entlang der Längs- bzw. Walzenachse verteilt und dabei konzentrisch um diese angeordnet sind.

Auch ist bekannt, mehrere stempelartige oder schneidmesserartige Bodenbearbeitungswerkzeuge als Gruppe in einer senkrecht zur Längs- bzw. Walzenachse verlaufenden Ebene gleichmäßig um die Längs- bzw. Walzenachse herum verteilt anzuordnen, wobei mehrere solcher Gruppen in Richtung der Längs- bzw. Walzenachse vorgesehen sind. Eine derartige Bodenbearbeitungsvorrichtung ist beispielsweise aus DE 20 2015 101 330 U1 bekannt.

Aus der DE 20 2010 013 512 U1 ist auch eine walzenförmige Vorrichtung zur Bodenbearbeitung bekannt, bei der ein Nabenrohr vorgesehen ist, an dem mehrere, aus flachen Federmetallstreifen hergestellte Ringelemente als Werkzeuge befestigt sind. Das Nabenrohr bildet den Walzenkörper und jeweils ein Ringelement ist über zumindest zwei Speichen mit dem Nabenrohr verbunden, indem ein radial inneres freies Ende einer jeweiligen Speiche mit der Außenseite des Nabenrohres verschweißt ist.

Aufgrund der notwendigen Schweißarbeiten ist die Herstellung der aus dem Stand der Technik bekannten Lösungen aufwändig und arbeitsintensiv. Auch weisen die bekannten Bodenbearbeitungsvorrichtungen aufgrund der Nabenrohre bzw. Walzenkörper nachteilig ein erhöhtes Gewicht auf, wodurch nicht der Energiebedarf zum Betrieb der Bodenbearbeitungsvorrichtungen gesteigert ist.

Daher besteht trotz der aus dem Stand der Technik bekannten Lösungen ein Bedarf an verbesserten Tragvorrichtungen zum tragenden Halten von Bodenbearbeitungswerkzeugen sowie ein weiterer Bedarf an verbesserten Bodenbearbeitungsvorrichtungen.

### Darstellung der Erfindung

Aufgabe der vorliegenden Erfindung ist es daher eine verbesserte Tragvorrichtung zur Verfügung zu stellen, die die Nachteile des Standes der Technik überwindet und die bei insbesondere leichterem Gewicht auf einfache Weise und dabei gleichzeitig präzise hergestellt werden kann. Diese Aufgabe wird erfindungsgemäß durch die Tragvorrichtung gemäß unabhängigem Anspruch 1 sowie durch die Bodenbearbeitungsvorrichtung gemäß dem nebengeordneten Anspruch 16 gelöst. Weitere vorteilhafte Aspekte, Details und Ausgestaltungen der Erfindung ergeben sich aus den abhängigen Ansprüchen, der Beschreibung sowie den Zeichnungen.

Die Erfindung stellt eine Tragvorrichtung einer walzenartigen, rotierenden Bodenbearbeitungsvorrichtung zur Verfügung, die zum tragenden Halten von Bodenbearbeitungswerkzeugen der Bodenbearbeitungsvorrichtung ausgebildet ist. Die Tragvorrichtung weist eine Mittellängsachse auf und ist um die Mittellängsachse rotierbar ausgebildet. Gemäß einem besonderen Aspekt der Erfindung weist die Tragvorrichtung einen die Mittellängsachse aufnehmenden Zentrumsbereich sowie mindestens eine speichenartig ausgebildete und radial vom Zentrumsbereich wegstehende Werkzeugaufnahme für die Befestigung wenigstens eines Bodenbearbeitungswerkzeugs auf. Die Tragvorrichtung umfasst wenigstens ein erstes flächiges Tragelement, wobei der Zentrumsbereich der Tragvorrichtung zumindest zum Teil durch einen Mittenabschnitt des ersten flächigen Tragelements gebildet ist. Die zumindest eine speichenartig ausgebildete und radial vom Zentrumsbereich wegstehende Werkzeugaufnahme ist durch zumindest einen dem Mittenabschnitt abgewandten Tragabschnitt des wenigstens einen ersten flächigen Tragelements gebildet.

Die rotierbare Tragvorrichtung kann im Sinne der vorliegenden Erfindung auch als Befestigungsvorrichtung zur Befestigung von Bodenbearbeitungswerkzeugen einer walzenartigen, rotierenden Bodenbearbeitungsvorrichtung bezeichnet werden. Die rotierbare Tragvorrichtung wird vorliegend auch als Tragelementanordnung bzw. als Anordnung aus flächigen Tragelementen verstanden, wobei die jeweils flächig ausgebildeten Tragelemente auch als flächige Befestigungselemente bezeichnet werden können. Das Tragelement selbst und auch die mindestens eine, vom Zentrumsbereich wegstehende Werkzeugaufnahme haben eine Tragfunktion bzw. Befestigungsfunktion für das bzw. die zu befestigenden Bodenbearbeitungswerkzeuge und bleiben damit insbesondere ohne "Werkzeug-Funktion".

Die flächigen Tragelemente sind im vorliegenden Verständnis Flachteile oder Flachstücke bzw. flach ausgebildete Flächenelemente oder flach ausgebildete, flächige Formstücke. Die flächigen Tragelemente können vorzugsweise einstückig, das heißt in einem Stück ausgebildet sein, und zwar derart, dass der Mittenabschnitt und der Tragabschnitt aus einem Stück bestehen und damit der den Zentrumsbereich bildende Mittenabschnitt einschließlich der speichenartigen Werkzeugaufnahmen aus einem Stück sind. Alternativ kann vorgesehen sein, dass das flächige Tragelement mehrteilig ausgebildet ist und im Zentrumsbereich ferner mindestens ein flächiges Halteelement bzw. flächiges Verbindungselement vorgesehen ist, welches mit dem Mittenabschnitt des flächigen Tragelements zusammenwirkt. Ein solches flächiges Halte- bzw. Verbindungselement kann zum Beispiel leistenartig oder profilartig ausgebildet sein, um im verbundenen Zustand mit dem Mittenabschnitt des Tragelements den Zentrumsbereich zu bilden. Beispielsweise kann der Mittenabschnitt des flächigen Tragelements zwischen zwei flächige Halte- bzw. Verbindungselemente geklemmt und somit klemmend von den Halte- bzw. Verbindungselementen gehalten sein.

Jedes Tragelement erstreckt sich damit in der flächigen Konfiguration ausgehend vom Zentrumsbereich, insbesondere ausgehend von der Mittellängsachse bis zu einem äußeren Umfang der Tragvorrichtung, nämlich bis zu einer Peripherie, an der die Bodenbearbeitungswerkzeuge befestigt werden können, und zwar insbesondere als durchgehendes oder im Wesentlichen durchgehendes, vorzugsweise nahtloses Flächenelement, das insbesondere keine Schweißnaht oder dergleichen aufweist.

Der die Mittellängsachse aufnehmende Zentrumsbereich eines jeden Tragelements ist im Sinne der vorliegenden Erfindung somit durch einen Abschnitt, nämlich einen Materialabschnitt insbesondere durch ein Materialteilstück des als Flachteil oder Flachstücks ausgebildeten flächigen Tragelements gebildet. Eine Oberfläche des mindestens einen Tragelements erstreckt sich insbesondere durch den Zentrumsbereich. Somit ist die Mittellängsachse vorzugsweise von dem Flachteil oder Flachstück aufgenommen und verläuft insbesondere nicht in einem inneren Hohl- oder Leerraum.

Insbesondere ist die Tragvorrichtung als Teil oder Grundbauteil bzw. als tragendes Teil oder tragendes Grundbauteil einer als Bodenbearbeitungswalze ausgebildeten Bodenbearbeitungsvorrichtung zu verstehen, welche beispielsweise drehbar in einem Bodenbearbeitungsgerät oder einer Bodenbearbeitungsmaschine verwendet und hierzu für einen rotierenden Betrieb in einem Trägerrahmen des Bodenbearbeitungsgeräts bzw. der Bodenbearbeitungsmaschine drehbar gelagert oder aufgehängt ist. Die Mittellängsachse der Tragvorrichtung stellt zugleich deren Rotations- bzw. Drehachse sowie auch die Rotations- bzw. Drehachse der Bodenbearbeitungsvorrichtung dar.

Die vorliegende Tragvorrichtung ist insbesondere dazu ausgebildet, beliebige bzw. verschiedene Bodenbearbeitungswerkzeuge tragend zu haltern, um insbesondere für unterschiedlichste walzenartige Bodenbearbeitungsvorrichtungen zur Bearbeitung einer landwirtschaftlichen Fläche verwendet werden zu können. Die verschiedenen Bodenbearbeitungswerkzeuge werden mit der vorliegenden Tragvorrichtung insbesondere beabstandet zur Mittellängsachse gehalten bzw. befestigt.

Die vorliegende Tragvorrichtung ersetzt insbesondere die in herkömmlichen Walzen zur Bodenbearbeitung vorhandenen Nabenrohre sowie die daran mittels Schweißen verbundenen Speichen für die Befestigung der Bodenbearbeitungswerkzeuge im Abstand zur Rotations- oder Walzenachse. Darüber ergibt sich bei der vorliegenden erfindungsgemäßen Tragvorrichtung der besondere Vorteil, dass aufwändige Schweißarbeiten zum Anschweißen der Speichen entfallen und die Herstellung damit einfacher und präziser ist. Weiterhin ergibt sich der Vorteil, dass auf Nabenrohre bzw. Wellen- oder Walzenkörper verzichtet werden kann, wodurch die Tragvorrichtung kostengünstiger in der Herstellung ist und aufgrund des verringerten Gewichts auch Energieeinsparungen für den Betrieb der Bodenbearbeitungsvorrichtung möglich sind.

Ein als Hohlwelle oder Walzenzylinder ausgebildeter Wellen-, Naben- oder Walzenkörper entfällt bei der erfindungsgemäßen Tragvorrichtung, so dass die Tragvorrichtung auch als nabenrohrloser Walzengrundkörper oder als walzenkörperlose Tragvorrichtung verstanden werden kann und gleichermaßen eine die Tragvorrichtung umfassende Bodenbearbeitungsvorrichtung als nabenrohrlose oder walzenkörperlose Bodenbearbeitungswalze verstanden werden kann.

Vorzugsweise bildet der zumindest eine Tragabschnitt des wenigstens einen ersten flächigen Tragelements mehrere, in Richtung der Mittellängsachse in einer Reihe hintereinander angeordnete, speichenartig bzw. stegartig ausgebildete und radial nach außen wegstehende Werkzeugaufnahmen. Dabei können die speichenartigen bzw. stegartigen und radial nach außen wegstehenden Werkzeugaufnahmen so in Reihe angeordnet sein, dass die Reihen parallel oder im Wesentlichen parallel oder windschief zur Mittellängsachse verlaufen, oder gewendelt zu dieser orientiert sind. Ebenfalls denkbar ist, dass die speichenartig bzw. stegartig ausgebildeten und radial nach außen wegstehenden Werkzeugaufnahmen abgewinkelt ausgebildet sind, insbesondere durch Biegen eines Speichenabschnittes der Werkzeugaufnahmen, wobei ein dem Zentrumsbereich zugewandter innerer Abschnitt des Speichenabschnittes und ein nach außen weisender äußerer Abschnitt des Speichenabschnittes einen vorgegebenen stumpfen Winkel, beispielsweise einen Winkel in einem Bereich von 150° bis 170°, vorzugsweise in einem Bereich von 160° bis 165° und beispielsweise in einem Winkel von rund 163° einschließen.

Unter einer speichenartig und/oder stegartig ausgebildeten und radial vom Zentrumsbereich wegstehenden oder radial nach außen wegstehenden Werkzeugaufnahme wird vorliegend verstanden, dass die Werkzeugaufnahme, insbesondere der Speichenabschnitt der Werkzeugaufnahme, eine in Richtung der Mittellängsachse verlaufende Breite aufweist, die im Vergleich zu einer ebenfalls in Richtung der Mittellängsachse verlaufenden Länge der Tragvorrichtung, welche vorzugsweise zugleich einer Arbeitsbreite einer entsprechenden Bodenbearbeitungsvorrichtung entspricht, reduziert ist. Insbesondere ist die Breite der speichenartigen Werkzeugaufnahmen gering gegenüber der Länge der Tragvorrichtung und beträgt vorzugsweise höchstens 20% oder höchstens 10% oder höchstens 5% der Länge der Tragvorrichtung, und liegt besonders bevorzugt in einem Bereich zwischen 1% und 2% der Länge der Tragvorrichtung.

Bevorzugt sind neben dem zumindest einen ersten flächigen Tragelement mehrere weitere, flächige Tragelemente vorgesehen, nämlich wenigstens ein zweites flächiges Tragelement oder wenigstens ein zweites und ein drittes flächiges Tragelement oder wenigstens ein zweites, drittes und viertes flächiges Tragelement. Selbstverständlich kann auch eine über die Anzahl von vier hinausgehende Anzahl von Tragelementen vorgesehen sein. Jedes der Tragelemente weist einen zumindest teilweise den Zentrumsbereich bildenden Mittenabschnitt sowie zumindest einen dem Zentrumsbereich abgewandten und von der Mittellängsachse beabstandeten Tragabschnitt für die Befestigung der Bodenbearbeitungswerkzeuge auf. Die Tragelemente sind im Bereich ihrer Mittenabschnitte, insbesondere über ihre Mittenabschnitte, derart miteinander verbunden, dass ihre Tragabschnitte bezogen auf die Mittellängsachse radial nach außen stehend orientiert sind.

Vorzugsweise sind die weiteren flächigen Tragelemente ebenfalls jeweils einstückig ausgebildet. Alternativ kann vorgesehen sein, dass auch die weiteren flächigen Tragelemente mehrteilig ausgebildet sind. So können ein oder mehrere mit dem Mittenabschnitt der flächigen Tragelemente zusammenwirkende flächige Halte- oder Verbindungselemente im Zentrumsbereich vorgesehen sein. Dabei kann ein Halte- oder Verbindungselement mit jeweils einem oder auch mit mehreren flächigen Tragelementen, insbesondere mit dessen/deren Mittenabschnitt zusammenwirken.

Vorzugsweise sind die Tragelemente unmittelbar und direkt miteinander verbunden, beispielsweise mittels Schrauben miteinander verschraubt. Im Falle von zusätzlich vorgesehenen Halte- oder Verbindungselementen, zum Beispiel leistenartigen oder profilartigen Verbindungselementen, können beispielsweise auch die Halte- oder Verbindungselemente untereinander verschraubt sein und die Tragelemente können klemmend über die Halte- oder Verbindungselemente gehalten sein, um letztlich die Mittenabschnitte der Tragelemente zu verbinden.

Die mehreren flächigen Tragelemente sind bevorzugt derart miteinander verbunden, dass die jeweiligen radial abstehenden Tragabschnitte in vorgegebenen Winkelabständen zueinander angeordnet sind. Vorzugsweise sind die flächigen Tragelemente so miteinander verbunden, dass die radial abstehenden Tragabschnitte bezogen auf die Mittellängsachse regelmäßig um diese herum verteilt sind und in jeweils gleichen Winkelabständen zueinander um die Mittellängsachse verteilt angeordnet sind. Je nach Anzahl und Ausgestaltung der flächigen Tragelemente beträgt beispielsweise der Winkelabstand zwischen benachbarten Tragabschnitten rund 180° oder rund 120° oder rund 90° oder rund 60° oder rund 30°. Es versteht sich, dass auch beliebige andere Winkelabstände möglich sind.

Durch die einstückige Ausbildung der jeweiligen flächigen Tragelemente und aufgrund der vorzugsweise direkten Verbindung der Mittenbereiche der Tragelemente zur Bildung des Zentrumsbereichs der Tragvorrichtung kann beispielsweise auch ein Gesamtdurchmesser der Tragvorrichtung und damit auch der Bodenbearbeitungsvorrichtung gering gehalten werden, was abhängig von der jeweiligen Ausgestaltung der Bodenbearbeitungsvorrichtung Vorteile mit sich bringt.

Im Sinne der vorliegenden Erfindung ist das flächige Tragelement auch zu verstehen als eine Anordnung oder Zusammensetzung aus mindestens einem oder mehreren Tragelement-Segmenten, die gemeinsam das "flächige Tragelement" bilden bzw. sich zu diesem zusammensetzen. Vorliegend können somit auch Tragelement-Segmente in Richtung der Mittellängsachse hintereinander anschließen und ein zusammengesetztes "flächiges Tragelement" bilden und auf diese Weise eine Reihe von mehreren speichenartigen Werkzeugaufnahmen zur Verfügung stellen.

Beispielsweise weist jedes Tragelement-Segment für sich genommen einen Mittenabschnitt und Halteabschnitt auf, wobei jedes Tragelement-Segment für sich genommen vorzugsweise einstückig ausgebildet ist, nämlich in der Weise, dass Mittenabschnitt und Halteabschnitt aus einem Stück geformt bzw. gefertigt sind. Insbesondere in Ausführungsformen, in denen zusätzlich flächige Halte- oder Verbindungselemente zum klemmenden Halten der Tragelemente vorgesehen sind, ist es hierbei möglich, die vorzugsweise leistenförmigen Halte- oder Verbindungselemente ihrer Länge nach in Richtung der Mittellängsachse nebeneinander in einem derartigen Abstand zueinander anzuordnen, dass die Tragelement-Segmente mit ihren jeweiligen Mittenabschnitten zwischen die leistenförmigen Halte- oder Verbindungselemente eingeschoben oder eingesteckt werden können, um auf diese Art klemmend zwischen den Halte- oder Verbindungselementen gehalten zu werden. Damit können derartige Tragelement-Segmente auf einfache Weise in Richtung der Mittellängsachse hintereinander anschließend angeordnet werden.

Die flächigen Tragelemente sind aus einem Metallblech oder Flachmetall, insbesondere aus einem Stahblech hergestellt und können beispielsweise durch Stanzen oder Schneiden, insbesondere mittels Laserschneiden aus dem Metallblech oder Flachmetall, insbesondere dem Stahblech gefertigt werden, wodurch sich eine besonders präzise dabei aber gleichzeitig einfache Herstellung ergibt. Die so gefertigten, vorzugsweise einstückig ausgebildeten Tragelemente, die sowohl den Mittenabschnitt als auch die speichenartigen Werkzeugaufnahmen des Halteabschnittes umfassen und bei denen der Mittenabschnitt und die speichenartigen Werkzeugaufnahmen "aus einem Stück" sind, können hier auch als Stanzteile oder Laserteile bezeichnet werden und weisen neben der besonders präzisen Ausgestaltung insbesondere auch eine verbesserte Stabilität auf.

Jedes der flächigen Tragelemente ist im Wesentlichen kammartig ausgebildet, wobei die speichenartig ausgebildeten Werkzeugaufnahmen im Wesentlichen Zähne eines Kamms beschreiben.

Bevorzugt definieren die speichenartig ausgebildeten Werkzeugaufnahmen mit ihren jeweiligen freien Enden einen äußeren Rand der flächigen Tragelemente. Ein Bereich um die freien Enden bildet dabei im Wesentlichen einen Befestigungs- bzw. Halterungsabschnitt der Werkzeugaufnahmen, an den in Richtung zur Mittellängsachse hin ein Speichenabschnitt anschließt.

Gemäß einer bevorzugten Ausführungsform der Erfindung liegt eine sich in radialer Richtung erstreckende Breite der flächigen Tragelemente in einem Bereich von 50 mm bis 500 mm, bevorzugt in einem Bereich von 100 mm bis 350 mm oder von 150 mm bis 300 mm, ganz besonders bevorzugt in einem Bereich von 200 mm bis 250 mm. Alternative ist auch eine Breite in einem Bereich von 60 mm bis 140 mm, besonders bevorzugt in einem Bereich von 70 mm bis 130 mm, ganz besonders bevorzugt in einem Bereich von 75 mm bis 125 mm, insbesondere bevorzugt in einem Bereich von 85 mm bis 115, noch mehr bevorzugt in einem Bereich von 90 mm bis 110 mm bevorzugt.

Die Breite der flächigen Tragelemente stellt hierbei näherungsweise den Radialabstand des äußeren Randes der Werkzeugaufnahmen von der Mittellängsachse dar und definiert dabei näherungsweise einen Radius eines um die Mittellängsachse gedachten Kreises, wobei die doppelte Breite der Tragelemente im Wesentlichen einem Durchmesser der Tragvorrichtung entspricht. Insbesondere bevorzugt weisen sämtliche Tragelemente der Tragvorrichtung dieselbe Breite auf.

Gemäß einer bevorzugten Ausführungsvariante der Erfindung weisen die flächigen Tragelemente im Bereich ihres Mittenabschnittes einen gewinkelt ausgebildeten Flanschabschnitt auf, der einen Verbindungsabschnitt zum Verbinden der Tragelemente untereinander bildet. Auf diese Weise können die Tragelemente besonders einfach sowie zugleich stabil und sicher miteinander verbunden, insbesondere miteinander verschraubt werden.

Bevorzugt weist das erste flächige Tragelement einen ersten und einen zweiten Tragabschnitt auf, wobei sich die Tragabschnitte in Bezug auf die Mittellängsachse gegenüberliegen. In dieser besonders einfachen oder "minimalistischen" Ausführungsform kann in Abhängigkeit der zu befestigenden Bodenbearbeitungswerkzeuge ein einziges Tragelement für die Befestigung der Bodenbearbeitungswerkzeuge ausreichen. Das erste flächige Tragelement ist hierbei im Wesentlichen als Doppelkamm ausgebildet, bei dem die Werkzeugaufnahmen in zwei sich in Bezug auf die Mittellängsachse gegenüberliegenden und einander abgewandten Zahnreihen angeordnet sind. Insbesondere liegen sich dabei die einzelnen speichenartigen Werkzeugaufnahmen der beiden Zahnreihen direkt gegenüber, so dass die Mittellängsachse eine Spiegelachse darstellt. Der mittig zwischen den freiendseitigen Tragabschnitten angeordnete Mittenabschnitt ist in diesen Ausführungsformen besonders bevorzugt als durchgehender Flächenabschnitt ausgebildet, der beispielsweise verglichen zu flächigen Tragelementen mit nur einem Tragabschnitt eine vergrößerte Breite aufweist.

Beispielsweise können mit einer derartigen Tragvorrichtung solche Bodenbearbeitungswerkzeuge sicher befestigt werden, die in Form von Ringen oder Bändern, beispielsweise Federbändern zur Verwendung in Ringwalzen oder Bandwalzen, beispielsweise Federbandwalzen ausgebildet sind, da jeder Ring bzw. jedes Band hierüber beispielsweise mit jeweils zwei, im Winkel von ca. 180° zueinander angeordneten Werkzeugaufnahmen oder aber mit mehreren, in kleineren Winkelabständen um die Mittellängsachse herum verteilt angeordneten Werkzeugaufnahmen befestigt werden kann.

Bevorzugt sind die flächigen Tragelemente im Zentrumsbereich durch Verschrauben miteinander verbunden.

Gemäß besonders bevorzugter Ausführungsvarianten ist an den speichenartig ausgebildeten Werkzeugaufnahmen ferner wenigstens eine Werkzeughalterung zur Befestigung der Bodenbearbeitungswerkzeuge vorgesehen, wobei insbesondere an jeder speichenartig ausgebildeten Werkzeugaufnahme eine Werkzeughalterung vorgesehen ist, die vorzugsweise im Bereich des freien Endes der Werkzeugaufnahme mit dieser verbunden oder an diese angeformt ist.

Beispielsweise sind Werkzeughalterungen einstückig mit den Werkzeugaufnahmen ausgebildet und durch Halterung- oder Befestigungsabschnitte der Werkzeugaufnahmen gebildet. Alternativ können die Werkzeughalterungen durch separate Teile gebildet sein, die vorzugsweise an den Werkzeugaufnahmen festgelegt, insbesondere angeschraubt sind. Unabhängig davon, ob die Werkzeughalterungen einstückig mit den Werkzeugaufnahmen ausgebildet oder durch separate Teile gebildet sind, können die Werkzeughalterungen zur formschlüssigen und/oder kraftschlüssigen Befestigung der Bodenbearbeitungswerkzeuge ausgebildet sein. Beispielsweise können hierzu auch Lochungen für den Eingriff von Bolzen oder Schrauben vorgesehen sein.

In dem in Richtung zur Mittellängsachse hin sich an den Bereich des freien Endes anschließenden Speichenabschnitt können die speichenartig ausgebildeten Werkzeugaufnahmen auch gewinkelt bzw. abgekantet ausgebildet sein. Beispielsweise können die mehreren, entlang der Mittellängsachse in Reihe hintereinander angeordneten Werkzeugaufnahmen eines Tragelementes abwechselnd in gegensätzliche Richtungen abgewinkelt sein, so dass die freien Enden von unmittelbar aufeinander folgenden Werkzeugaufnahmen in einem Winkel zueinander ausgerichtet sind.

Besonders bevorzugt sind die Werkzeughalterungen auswechselbar an den Werkzeugaufnahmen befestigt, so dass die Tragvorrichtung mit verschiedenen Bodenbearbeitungswerkzeugen ausgestattet werden kann und dadurch vielseitig einsetzbar ist.

Die vorliegende Erfindung betrifft auch eine Bodenbearbeitungsvorrichtung aufweisend eine Tragvorrichtung wie voranstehend beschrieben, sowie ferner zumindest ein an der Tragvorrichtung befestigtes Bodenbearbeitungswerkzeug, wobei die Bodenbearbeitungsvorrichtung walzenartig ausgebildet und für einen rotierenden Betrieb eingerichtet ist.

Bevorzugt ist jedes Bodenbearbeitungswerkzeug mit zumindest einem oder mit mehreren Werkzeugaufnahmen verbunden.

Ebenso bevorzugt ist als Bodenbearbeitungswerkzeug ein langgestrecktes, stab- oder rohrstabartiges Bodenbearbeitungswerkzeug vorgesehen, das über mehrere in Richtung der Mittellängsachse nebeneinander angeordnete Werkzeugaufnahmen befestigt ist. Das stab- oder rohrstabartige Bodenbearbeitungswerkzeug ist dabei in Bezug auf die Mittellängsachse achsparallel oder windschief befestigt.

Weiterhin bevorzugt kann als Bodenbearbeitungswerkzeug ein ringartiges Bodenbearbeitungswerkzeug vorgesehen sein, das über mehrere auf einer konzentrisch um die Mittellängsachse verlaufenden Kreisbahn angeordnete Werkzeugaufnahmen befestigt ist.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: schematisch dargestellt eine Schnittansicht einer bevorzugten Ausführungsform der Tragvorrichtung gemäß der vorliegenden Erfindung;
- Fig. 2a: schematisch dargestellt eine Schnittansicht einer weiteren bevorzugten Ausführungsform der Tragvorrichtung gemäß der vorliegenden Erfindung;
- Fig. 2b: schematisch dargestellt eine Schnittansicht einer alternativen Ausführungsform der Tragvorrichtung gemäß der vorliegenden Erfindung;
- Fig. 3: in einer grob schematischen und sehr vereinfachten Darstellung eine perspektivische Ansicht einer Bodenbearbeitungsvorrichtung mit einer Ausführungsform einer Tragvorrichtung;
- Fig. 4: isoliert dargestellt die Tragvorrichtung der Figur 3;
- Fig. 5: grob schematisch und sehr vereinfacht dargestellt in perspektivischer Ansicht eine alternative Ausführungsform der Tragvorrichtung mit verschiedenen daran befestigten Bodenbearbeitungswerkzeugen und
- Fig. 6a, b: in stark vereinfachter Darstellung jeweils eine Ansicht einer Ausführungsform eines flächigen Tragelements.

### Wege zur Ausführung der Erfindung

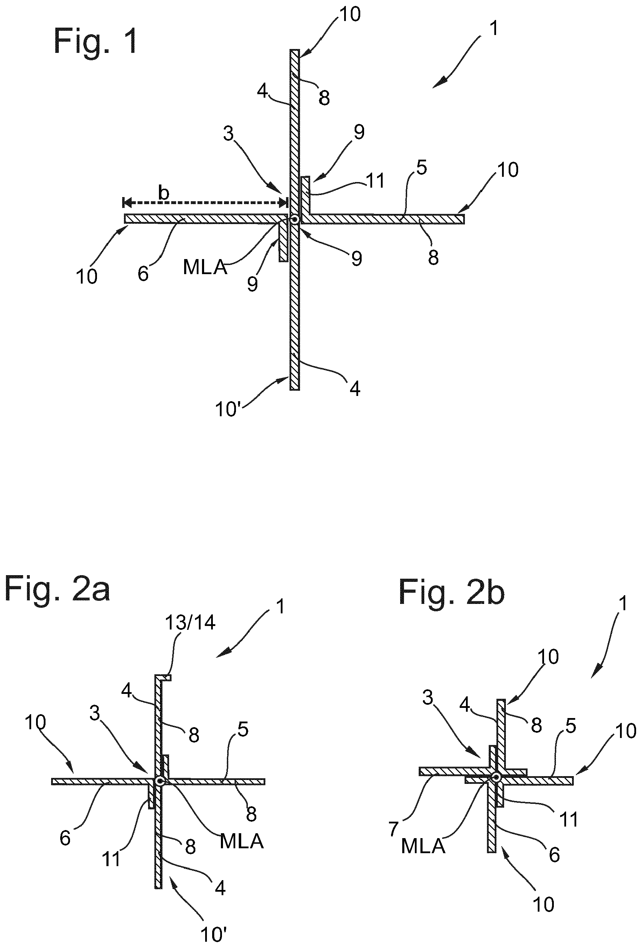

Die Figuren 1 sowie 2a und 2b zeigen schematisch dargestellt jeweils eine Schnittansicht einer bevorzugten Ausführungsform der Tragvorrichtung 1 gemäß der vorliegenden Erfindung.

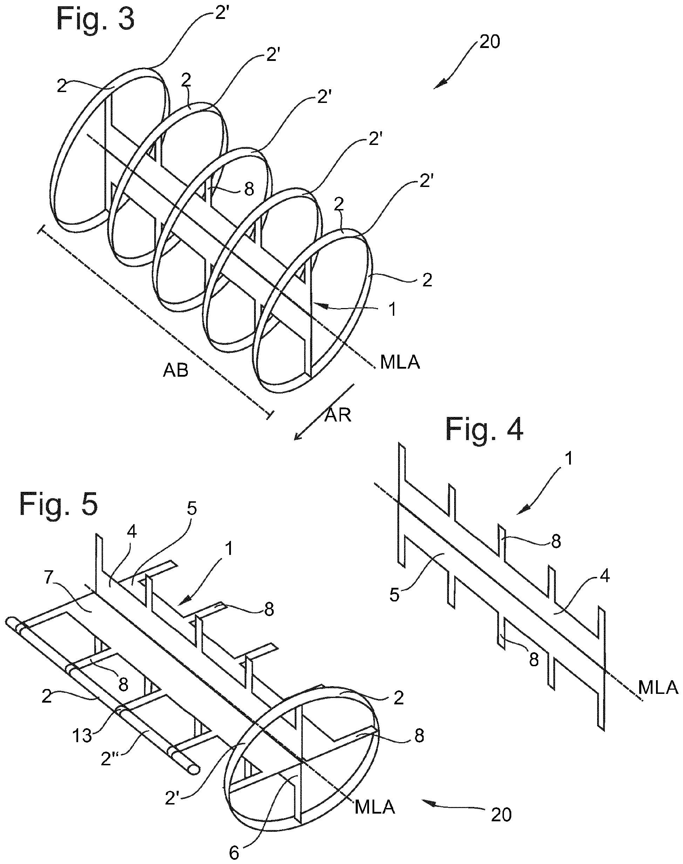

Die beispielhaft dargestellte Tragvorrichtung 1 ist zum tragenden Halten von Bodenbearbeitungswerkzeugen 2 (in Figuren 1, 2a, 2b nicht dargestellt, siehe z.B. Figuren 3 und 4) einer im Wesentlichen walzenartigen und zum rotierenden Betrieb eingerichteten Bodenbearbeitungsvorrichtung 20 ausgebildet.

Derlei walzenartige Bodenbearbeitungsvorrichtungen 20 werden in der Regel in einer entsprechenden, in den Figuren nicht näher dargestellten Bodenbearbeitungsmaschine bzw. in einem Bodenbearbeitungsgerät eingesetzt. Hierzu ist die Bodenbearbeitungsvorrichtung 20 beispielsweise in einem Trägerrahmen des Bodenbearbeitungsgeräts drehbar gelagert und über eine entsprechende Lagerung oder Aufhängung an dem Trägerrahmen befestigt.

Bodenbearbeitungsvorrichtungen 20 der genannten Art können einzeln im "Soloeinsatz" oder aber auch in Kombination mit gleich- oder andersartigen Bodenbearbeitungsvorrichtungen 20 in der Bodenbearbeitungsmaschine bzw. in dem Bodenbearbeitungsgerät eingesetzt und betrieben werden. Der Betrieb der vorliegenden Bodenbearbeitungsvorrichtung 20 ist in einer so genannten Schubfahrt, nämlich in Arbeitsrichtung vor der Zugmaschine oder alternativ in einer so genannten Zugfahrt, nämlich in Arbeitsrichtung nach der Zugmaschine, möglich.

Die Tragvorrichtung 1, die in den Figuren dargestellt und vorliegend beschrieben ist und die im Wesentlichen auch als Teil oder Grundbauteil der Bodenbearbeitungsvorrichtung 20 verstanden werden kann, weist eine Mittellängsachse MLA auf, entlang derer sich die Tragvorrichtung 1 ihrer Länge nach erstreckt. Die Tragvorrichtung 1 ist um die Mittellängsachse MLA rotierbar ausgebildet und kann um diese rotieren, nämlich insbesondere zum Betrieb der Bodenbearbeitungsvorrichtung 20, so dass die Mittellängsachse MLA zugleich auch Drehachse bzw. Rotationsachse der Tragvorrichtung 1 bildet und dabei achsgleich mit der Dreh- bzw. Rotationsachse der rotierenden Bodenbearbeitungsvorrichtung 20 zusammenfällt.

Für die dargestellten Beispiele gilt im Wesentlichen, dass sich die Tragvorrichtung 1 bzw. die Bodenbearbeitungsvorrichtung 20 im Betrieb ihrer Länge nach quer zu einer Arbeitsrichtung AR (siehe Figur 3) der Bodenbearbeitungsvorrichtung 20 und des Bodenbearbeitungsgeräts erstrecken, das heißt, im Betrieb verläuft die Mittellängsachse MLA im Wesentlichen senkrecht zur Arbeitsrichtung AR, nämlich der Schub- oder Zugrichtung, des Bodenbearbeitungsgeräts. Dabei kann sich die entlang der Mittellängsachse MLA verlaufende Länge der Tragvorrichtung 1 vorzugsweise über eine gesamte, im Wesentlichen senkrecht zur Arbeitsrichtung AR verlaufende, Arbeitsbreite AB (siehe Figur 3) der Bodenbearbeitungsvorrichtung 20 erstrecken.

Die vorliegende Tragvorrichtung 1 weist einen die Mittellängsachse MLA aufnehmenden Zentrumsbereich 3 auf, von dem ausgehend radial nach außen hin wegstehende, speichenartig ausgebildete Werkzeugaufnahmen 8 für die Befestigung der Bodenbearbeitungswerkzeuge 2 vorgesehen sind, wie dies insbesondere mit Bezug auf die Figuren 3 bis 6b deutlich wird und nachfolgend im Zusammenhang mit diesen Figuren mehr im Detail beschrieben wird.

Die Tragvorrichtung 1 der Beispiele der Figuren 1 und 2a umfasst je drei aus einem Flachblech, insbesondere einem flachen Stahlblech hergestellte flächige Tragelemente 4, 5, 6, nämlich eine erstes flächiges Tragelement 4, sowie ein zweites und ein drittes flächiges Tragelement 5, 6. Jedes der jeweils einstückig ausgebildeten flächigen Tragelemente 4, 5, 6 weist dabei einen Mittenabschnitt 9 sowie mindestens einen dem Mittenabschnitt 9 abgewandten Tragabschnitt 10, 10' auf, wobei in den dargestellten Beispielen der Figuren 1 und 2a das zweite und dritte flächige Tragelement 5 jeweils einen Tragabschnitt 10 umfassen wohingegen das erste Tragelement 4 zwei sich in Bezug auf den Mittenabschnitt 9 gegenüberliegende Tragabschnitte 10, 10' aufweist.

Die flächigen Tragelemente 4, 5, 6 sind über ihre Mittenabschnitte 9 miteinander verbunden, insbesondere miteinander verschraubt, so dass die Mittenabschnitte 9 der flächigen Tragelemente 4, 5, 6 zusammen den Zentrumsbereich 3 der Tragvorrichtung 1 bilden, durch den sich die Mittellängsachse MLA erstreckt und von dem aus die Tragabschnitte 10, 10' radial nach außen stehend orientiert sind.

In den Beispielen der Figuren 1 und 2a weisen die flächigen Tragelemente 5, 6, im Bereich ihrer jeweiligen Mittenabschnitte 9 einen gewinkelt ausgebildeten Flanschabschnitt 11 auf, der einen Verbindungsabschnitt zum Verbinden, insbesondere zum Verschrauben, der Tragelemente 4, 5, 6 bildet. Der gewinkelt ausgebildete Flanschabschnitt 11 kann durch Biegen oder Aufkanten des Flachblechmaterials bzw. des Stahlblechs erzeugt werden. Der Mittenabschnitt 9 des ersten flächigen Tragelements 4 ist im Beispiel der Figuren 1 und 2a durch den sich mittig zwischen den Tragabschnitten 10, 10' erstreckenden durchgehend flächigen Bereich bzw. Flächenabschnitt gebildet.

Bei dem in Figur 2b dargestellten Beispiel sind im Gegensatz zu den Beispielen gemäß Figuren 1 und 2a vier flächige Tragelemente 4, 5, 6, 7 vorgesehen, nämlich ein erstes bis viertes flächiges Tragelement 4, 5, 6, 7, von denen jedes im Bereich seines jeweiligen Mittenabschnittes 9 einen gewinkelt ausgebildeten Flanschabschnitt 11 aufweist, der einen Verbindungsabschnitt zum Verbinden, insbesondere zum Verschrauben, der Tragelemente 4, 5, 6, 7 bildet.

Wie bereits erwähnt sind zur Befestigung der Bodenbearbeitungswerkzeuge 2 speichenartig ausgebildete und radial nach außen hin wegstehende Werkzeugaufnahmen 8 vorgesehen, welche durch die flächigen Tragelemente 4, 5, 6, 7 gebildet sind. Die speichenartigen Werkzeugaufnahmen 8 werden durch die jeweiligen Tragabschnitte 10, 10' der flächigen Tragelemente 4, 5, 6, 7 gebildet und sind in den dargestellten Beispielen der Figuren in einstückiger Ausführung mit den Tragelementen 4, 5, 6, 7 ausgebildet.

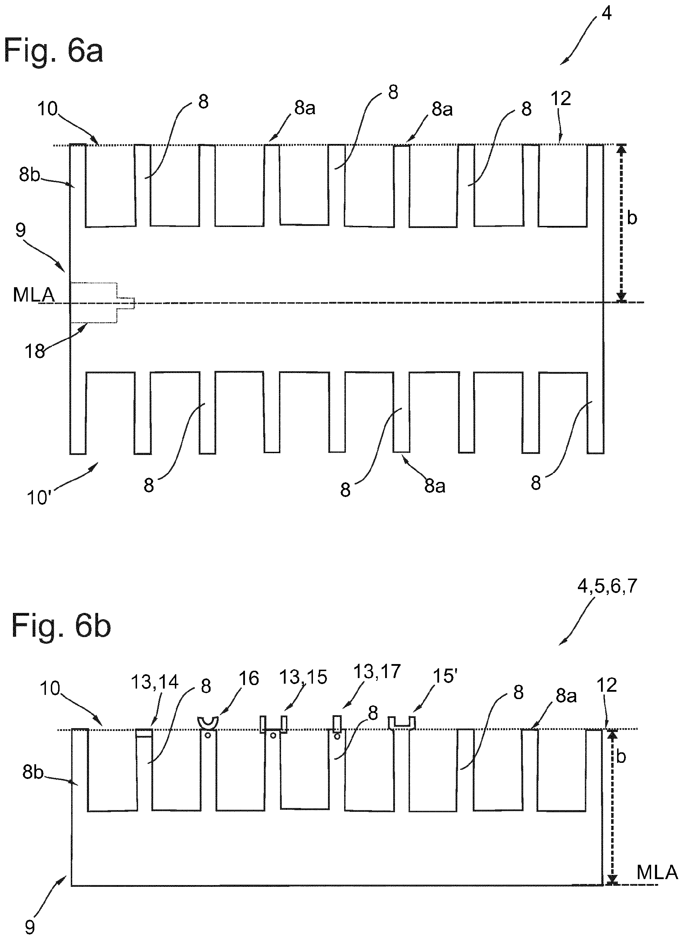

Wie insbesondere aus den Figuren 6a, 6b hervorgeht, sind die flächigen Tragelemente 4, 5, 6, 7 hierzu beispielsweise kammartig ausgebildet, wobei die speichenartigen Werkzeugaufnahmen 8 im Wesentlichen die Zähne bzw. Zinken eines Kamms beschreiben und mit ihren jeweiligen freien Enden 8a nach außen wegstehen. Das erste flächige Tragelement 4 im Beispiel der Figur 6a ist mit seinen zwei, sich in Bezug auf die Mittellängsachse MLA gegenüberliegenden Tragabschnitte 10, 10' in Form eines Doppelkamms ausgebildet. Die kammartigen flächigen Tragelemente 4, 5, 6, 7 sind beispielsweise mittels Laserschneiden gefertigt und können vorliegend auch als Laserteile verstanden werden.

Die jeweiligen freien Enden 8a der Werkzeugaufnahmen 8 definieren einen von der Mittellängsachse MLA abgewandten, in den Figuren 6a, 6b durch eine punktierte Linie angedeuteten, äußeren Rand 12 der flächigen Tragelemente 4, 5, 6, 7. Eine Breite b der flächigen Tragelemente 4, 5, 6, 7 entspricht dabei etwa dem Abstand des äußeren Randes 12 zur Mittellängsachse MLA.

Im Bereich der freien Enden 8a der speichenartigen Werkzeugaufnahmen 8 können zur Befestigung der Bodenbearbeitungswerkzeuge 2 Werkzeughalterungen 13 vorgesehen sein. Lediglich beispielhaft und exemplarisch sind in der Figur 6b verschiedenartige Werkzeughalterungen 13 dargestellt, welche an den Werkzeugaufnahmen 8 vorgesehen sein können.

So kann die Werkzeughalterung 13 beispielsweise als Halterungs- oder Befestigungsabschnitt 14 einstückig mit der Werkzeugaufnahme 8 ausgebildet sein, wobei der Halterungs- oder Befestigungsabschnitt 14 beispielsweise durch einen gewinkelt ausgebildeten Flansch am freien Ende 8a der Werkzeugaufnahme 8 durch Aufkanten bzw. Abwinkeln der Werkzeugaufnahme 8 gebildet ist, wie dies ferner aus Figur 2a beispielhaft ersichtlich ist. Alternativ können als Werkzeughalterung 13 auch Gabeln 15, Profilelemente 16 oder Stegelemente 17 vorgesehen sein, die im Bereich der freien Enden 8a der der Werkzeugaufnahmen 8 festgelegt sind, vorzugsweise mit den Werkzeugaufnahmen 8 verschraubt sind. Alternativ ist es ebenfalls möglich, die Werkzeugaufnahmen 8 mit Gabelabschnitten 15' oder Stegabschnitten auszustatten, welche einstückig an den Werkzeugaufnahmen 8 und damit an dem flächigen Tragelementen 4, 5, 6, 7 vorgesehen sind. In dieser Ausführungsvariante mit Gabelabschnitt 15' ist die Werkzeugaufnahme 8 zum Beispiel eine Speichengabel, die einstückig mit dem flächigen Tragelement 4, 5, 6, 7 ausgebildet ist und beispielsweise gleichzeitig mit Fertigung des Tragelements 4, 5, 6, 7 durch Laserschneiden erzeugt werden kann.

Ein Bereich der freien Enden 8a bildet dabei im Wesentlichen einen Befestigungs- bzw. Halterungsabschnitt der Werkzeugaufnahmen 8, welcher an einen Speichenabschnitt 8b anschließt. Je nach Ausgestaltung der Bodenbearbeitungsvorrichtung 20 und abhängig von der Art und Konfiguration der zu befestigenden Bodenbearbeitungswerkzeuge 2 können die Werkzeughalterungen 13 in unterschiedlichster Weise ausgeführt sein.

Anwendungsspezifisch und abhängig von der Art der zu verwendenden Bodenbearbeitungswerkzeuge 2 ist es selbstverständlich auch möglich, die Bodenbearbeitungswerkzeuge 2 unmittelbar und direkt am Speichenabschnitt 8b der Werkzeugaufnahmen 8 zu befestigen, beispielsweise dort anzuschrauben.

In den Figuren zwar nicht dargestellt ist es jedoch gemäß alternativer Ausführungsvarianten ebenfalls möglich, die speichenartig ausgebildeten Werkzeugaufnahmen 8 im Bereich ihrer Speichenabschnitte 8b abzubiegen bzw. gewinkelt auszubilden, so dass die Speichenabschnitte 8b bezogen auf die Mittellängsachse MLA zunächst vom Mittenabschnitt 9 aus in radialer Richtung nach außen wegstehen und dann in eine von der radialen Richtung abweichende Richtung abknicken. Die in Flucht hintereinander angeordneten Werkzeugaufnahmen 8 sind dabei beispielsweise abwechselnd in gegensätzliche Richtungen geknickt bzw. gewinkelt, derart, dass die freien Enden 8a der fluchtend hintereinander angeordneten und alternierend in unterschiedliche Richtungen abgewinkelten Werkzeugaufnahmen 8 in zwei Reihen verlaufen und das Tragelement 4, 5 in stirnseitiger Ansicht einen im Wesentlichen Y-förmigen Querschnitt aufweist.

Die vorliegende Tragvorrichtung 1 ist zum Tragen und Haltern einer Vielzahl verschiedenster Bodenbearbeitungswerkzeuge 2 eingerichtet und stellt somit Teil bzw. Grundbauteil verschiedenster Bodenbearbeitungsvorrichtungen 20 dar. In Figur 3 ist ein Beispiel einer als Federbandwalze ausgebildeten Bodenbearbeitungsvorrichtung 20 dargestellt, bei der an der Tragvorrichtung 1 als Bodenbearbeitungswerkzeuge 2 mehrere Ringe 2' befestigt sind, die beispielsweise aus einem Federstahlband hergestellt sind. Die Bodenbearbeitungsvorrichtung 20 weist beispielsweise eine Arbeitsbreite AB auf, die sich in Richtung der Mittellängsachse MLA zwischen stirnseitigen Enden der Bodenbearbeitungsvorrichtung 20 erstreckt.

Die in dem Beispiel der Bodenbearbeitungsvorrichtung 20 der Figur 3 verwendete und in Figur 4 noch einmal isoliert dargestellte Tragvorrichtung 1 ist in besonders einfacher Form ausgeführt und umfasst lediglich ein als Doppelkamm ausgebildetes, erstes flächiges Tragelement 4. Es versteht sich jedoch, dass diese Ausführungsform lediglich ein Beispiel darstellt und selbstverständlich andere Ausführungsformen, wie sie etwa gemäß Figuren 1, 2a, 2b oder 5 beschrieben sind, gleichermaßen für die Bodenbearbeitungsvorrichtung 20 gemäß Figur 3 verwendet werden können.

In Figur 5 ist eine weitere Tragvorrichtung 1 mit erstem, zweiten und dritten flächigen Tragelement 4, 5, 6 dargestellt. Wie aus Figur 5 lediglich zur leichteren Veranschaulichung angedeutet ist, können auch hier verschiedenste Bodenbearbeitungswerkzeuge 2 befestigt sein. Neben Ringen 2', Stegen, Stempeln oder dergleichen können auch achsparallel zur Mittellängsachse MLA verlaufende Stäbe 2" oder Rohrstäbe an den speichenartigen Werkzeugaufnahmen 8 befestigt sein.

Die vorliegende Bodenbearbeitungsvorrichtung 20 ist eine nabenrohrlose Walze zur Bodenbearbeitung, das heißt ein bei herkömmlichen Walzen zur Bodenbearbeitung vorhandenes Nabenrohr ist hier ersetzt durch den Zentrumsbereich 3, der durch die flächigen Tragelemente 4, 5, 6, 7 der Tragvorrichtung 1 gebildet ist. Die bei herkömmlichen Walzen üblicherweise am Nabenrohr angeschweißten Speichen zur Befestigung der Bodenbearbeitungswerkzeuge 2 sind bei der vorliegenden Bodenbearbeitungsvorrichtung 20 bzw. Tragvorrichtung 1 ersetzt durch die an den flächigen Tragelementen 4, 5, 6, 7 vorgesehen und einstückig mit diesen ausgebildeten speichenartigen Werkzeugaufnahmen 8.

Dadurch kann die vorliegende Bodenbearbeitungsvorrichtung 20 bzw. Tragvorrichtung 1 ohne Schweißen und damit einfacher, mit geringerem Arbeitsaufwand und kostengünstiger hergestellt werden. Auf Schweißarbeiten kann vorzugsweise ganz verzichtet werden. Die Tragvorrichtung 1 kann darüber insbesondere auch präziser und mit höherer Genauigkeit gefertigt werden.

Für die drehbare Lagerung oder Aufhängung der Bodenbearbeitungsvorrichtung 20 im Trägerrahmen eines Bodenbearbeitungsgeräts kann beispielsweise eine in den Figuren nicht dargestellte Lagereinheit zur rotierbaren Lagerung vorgesehen sein. Diese Lagereinheit kann beispielsweise zwei Lagerelemente umfassen, welche koaxial zur Mittellängsachse MLA orientiert sind und bezogen auf die Arbeitsbreite AB an den gegenüberliegenden Stirnseiten bzw. Außenseiten der Tragvorrichtung 1 angeordnet sind.

Hierbei ist es möglich, dass jedes vorzugsweise in Form entsprechend geeigneter Achsstummel oder Lagerstummel ausgebildete Lagerelement zur tragenden, abschnittsweisen Aufnahme der flächigen Tragelemente 4 5, 6, 7 ausgebildet ist und hierzu mit Ausnehmungen und/oder Eingriffsabschnitten der flächigen Tragelemente 4 5, 6, 7 zusammenwirkt. Eine optionale Ausgestaltung einer derartigen Ausnehmung bzw. eines Eingriffsabschnitts ist in Figur 6a durch eine punktierte Linie angedeutet und mit dem Bezugszeichen 18 versehen.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: Tragvorrichtung
- 2: Bodenbearbeitungswerkzeug
- 2': Ring oder Federstahlband
- 2": Stab oder Rohrstab
- 3: Zentrumsbereich
- 4: erstes Tragelement
- 5, 6, 7: zweites bis viertes Tragelement
- 8: Werkzeugaufnahme
- 8a: freies Ende der Werkzeugaufnahme
- 8b: Speichenabschnitt
- 9: Mittenabschnitt
- 10, 10': Tragabschnitt
- 11: Flanschabschnitt
- 12: äußerer Rand
- 13: Werkzeughalterung
- 14: Halterungs- oder Befestigungsabschnitt
- 15, 15': Gabel; Gabelabschnitt
- 16: Profilelement
- 17: Stegelement
- 18: Eingriffsabschnitt

- 20: Bodenbearbeitungsvorrichtung

- AB: Arbeitsbreite
- AR: Arbeitsrichhtung
- b: Breite
- MLA: Mittellängsachse

## Patentansprüche

1. Tragvorrichtung (1) zum tragenden Halten von Bodenbearbeitungswerkzeugen (2) einer walzenartig ausgebildeten, rotierenden Bodenbearbeitungsvorrichtung (20), wobei die Tragvorrichtung (1) eine Mittellängsachse (MLA) aufweist und um die Mittellängsachse (MLA) rotierbar ist, **dadurch gekennzeichnet, dass** die Tragvorrichtung (1) einen die Mittellängsachse (MLA) aufnehmenden Zentrumsbereich (3) sowie mindestens eine speichenartig ausgebildete und radial vom Zentrumsbereich (3) wegstehende Werkzeugaufnahme (8) für die Befestigung wenigstens eines Bodenbearbeitungswerkzeugs (2) aufweist, wobei die Tragvorrichtung (1) wenigstens ein erstes flächiges Tragelement (4) umfasst, wobei der Zentrumsbereich (3) der Tragvorrichtung (1) zumindest zum Teil durch einen Mittenabschnitt (9) des ersten flächigen Tragelements (4) gebildet ist und wobei die zumindest eine speichenartig ausgebildete und radial vom Zentrumsbereich (3) wegstehende Werkzeugaufnahme (8) durch zumindest einen dem Mittenabschnitt (9) abgewandten Tragabschnitt (10, 10') des wenigstens einen ersten flächigen Tragelements (4) gebildet ist.

2. Tragvorrichtung (1) nach Anspruch 1, **dadurch gekennzeichnet, dass** das zumindest eine flächige Tragelement (4) einstückig ausgebildet und insbesondere aus einem Stück gefertigt ist oder dass das flächige Tragelement (4) mehrteilig ausgebildet ist, wobei im Zentrumsbereich (3) ferner zumindest ein mit dem Mittenabschnitt (9) des flächigen Tragelements (4) zusammenwirkendes flächiges Halte- oder Verbindungselement vorgesehen ist.

3. Tragvorrichtung (1) nach Anspruch 1 oder 2, **dadurch gekennzeichnet, dass** der zumindest eine Tragabschnitt (10, 10') des flächigen Tragelements (4) mehrere, in Richtung der Mittellängsachse (MLA) in einer Reihe hintereinander angeordnete, speichenartig ausgebildete und radial nach außen wegstehende Werkzeugaufnahmen (8) bildet.

4. Tragvorrichtung (1) nach einem der Ansprüche 1 bis 3, **dadurch gekennzeichnet, dass** weitere, jeweils flächig ausgebildete Tragelemente (5, 6, 7) vorgesehen sind, nämlich wenigstens ein zweites flächiges Tragelement (5) oder wenigstens ein zweites und ein drittes flächiges Tragelement (5, 6) oder wenigstens ein zweites, drittes und viertes flächiges Tragelement (5, 6, 7), wobei jedes der Tragelemente (5, 6, 7) einen zumindest teilweise den Zentrumsbereich (3) bildenden Mittenabschnitt (9) sowie zumindest einen dem Zentrumsbereich (3) abgewandten und von der Mittellängsachse (MLA) beabstandeten Tragabschnitt (10) für die Befestigung der Bodenbearbeitungswerkzeuge (2) aufweist und wobei die mehreren Tragelemente (4, 5, 6, 7) über ihre Mittenabschnitte (9) derart miteinander verbunden sind, dass ihre Tragabschnitte (10) bezogen auf die Mittellängsachse (MLA) radial nach außen stehend orientiert sind.

5. Tragvorrichtung (1) nach einem der vorhergehenden Ansprüche, **dadurch gekennzeichnet, dass** die flächigen Tragelemente (4, 5, 6, 7) aus einem Metallblech oder Flachmetall, insbesondere aus einem Stahblech hergestellt sind, und/oder dass die flächigen Tragelemente (4, 5, 6, 7) mittels Stanzen oder Schneiden, insbesondere mittels Laserschneiden hergestellt sind.

6. Tragvorrichtung (1) nach einem der vorhergehenden Ansprüche, **dadurch gekennzeichnet, dass** jedes der flächigen Tragelemente (4, 5, 6, 7) im Wesentlichen kammartig ausgebildet ist, wobei die mehreren speichenartig ausgebildeten Werkzeugaufnahmen (8) im Wesentlichen Zähne eines Kamms beschreiben.

7. Tragvorrichtung (1) nach einem der vorhergehenden Ansprüche, **dadurch gekennzeichnet, dass** die speichenartig ausgebildeten Werkzeugaufnahmen (8) mit ihren jeweiligen freien Enden (8a) einen äußeren Rand (12) der flächigen Tragelemente (4, 5, 6, 7) definieren wobei die flächigen Tragelemente (4, 5, 6, 7) vorzugsweise ausgehend von der Mittellängsachse (MLA) bis zum äußeren Rand (12) eine sich in radialer Richtung erstreckende Breite (b) aufweisen, die bevorzugt in einem Bereich von 50 mm bis 500 mm liegt.

8. Tragvorrichtung (1) nach einem der vorhergehenden Ansprüche, **dadurch gekennzeichnet, dass** die flächigen Tragelemente (4, 5, 6, 7) im Bereich ihres Mittenabschnittes (9) einen gewinkelt ausgebildeten Flanschabschnitt (11) aufweisen, der einen Verbindungsabschnitt zum Verbinden der Tragelemente (4, 5, 6, 7) untereinander bildet.

9. Tragvorrichtung (1) nach einem der vorhergehenden Ansprüche 1 bis 7, **dadurch gekennzeichnet, dass** das erste flächige Tragelement (4) einen ersten und einen zweiten Tragabschnitt (10, 10') aufweist, wobei sich die Tragabschnitte (10, 10') in Bezug auf die Mittellängsachse (MLA) gegenüberliegen.

10. Tragvorrichtung (1) nach Anspruch 9, **dadurch gekennzeichnet, dass** der mittig zwischen den freiendseitigen Tragabschnitten (10, 10') angeordnete Mittenabschnitt (9) als durchgehender flacher Flächenabschnitt ausgebildet ist.

11. Tragvorrichtung (1) nach einem der vorhergehenden Ansprüche, **dadurch gekennzeichnet, dass** die mehreren flächigen Tragelemente (4, 5, 6, 7) im Zentrumsbereich (3) durch Verschrauben miteinander verbunden sind.

12. Tragvorrichtung (1) nach einem der vorhergehenden Ansprüche, **dadurch gekennzeichnet, dass** an den speichenartig ausgebildeten Werkzeugaufnahmen (8) ferner wenigstens eine Werkzeughalterung (13) zur Befestigung der Bodenbearbeitungswerkzeuge (2) vorgesehen ist, wobei insbesondere an jeder speichenartig ausgebildeten Werkzeugaufnahme (8) eine Werkzeughalterung (13) vorgesehen ist, wobei die Werkzeughalterung (13) vorzugsweise einstückig mit der Werkzeugaufnahme (8) ausgebildet und durch einen Halterungs- oder Befestigungsabschnitt (14) der Werkzeugaufnahmen (8) gebildet ist.

13. Bodenbearbeitungsvorrichtung (20) aufweisend eine Tragvorrichtung gemäß einem der Ansprüche 1 bis 12 sowie ferner zumindest ein an der Tragvorrichtung (1) befestigtes Bodenbearbeitungswerkzeug (2), wobei die Bodenbearbeitungsvorrichtung (20) walzenartig ausgebildet und für einen rotierenden Betrieb eingerichtet ist.

14. Bodenbearbeitungsvorrichtung (20) nach Anspruch 13, **dadurch gekennzeichnet, dass** jedes Bodenbearbeitungswerkzeug (2) mit zumindest einem oder mit mehreren Werkzeugaufnahmen (8) verbunden ist.

15. Bodenbearbeitungsvorrichtung (20) nach Anspruch 13 oder 14, **dadurch gekennzeichnet, dass** als Bodenbearbeitungswerkzeug (2) ein langgestrecktes, stab- oder rohrstabartiges Bodenbearbeitungswerkzeug (2") vorgesehen ist, das über mehrere in Richtung der Mittellängsachse (MLA) nebeneinander angeordnete Werkzeugaufnahmen (8) befestigt ist, wobei das stab- oder rohrstabartige Bodenbearbeitungswerkzeug (2") in Bezug auf die Mittellängsachse (MLA) achsparallel oder windschief befestigt ist oder dass als Bodenbearbeitungswerkzeug (2) ein ringartiges Bodenbearbeitungswerkzeug (2') vorgesehen ist, das über mehrere auf einer konzentrisch um die Mittellängsachse (MLA) verlaufenden Kreisbahn angeordnete Werkzeugaufnahmen (8) befestigt ist.
